# EUROPEAN PATENT APPLICATION

(11) **EP 4 443 201 A1**
(43) Date of publication of application: **09.10.2024**
(21) Application number: 22901647.2
(22) Date of filing: 21.11.2022
(51) Int. Cl.: G02B 5/30

(54) **HIGH-BRIGHTNESS SECURITY FILM**

(30) Priority: 30.11.2021 KR 20210168926
(71) Applicant: Miraenanotech Co., Ltd., Heungdeok-gu Cheongju-si, Chungcheongbuk-do 28122 (KR)
(72) Inventor: LEE, Joon Yong, Cheongju-si, Chungcheongbuk-do 28122 (KR); BAE, Chan Yeol, Cheongju-si, Chungcheongbuk-do 28122 (KR)
(74) Representative: Treeby, Philip David William
(86) International application number: PCT/KR2022/018395
(87) International publication number: WO 2023/101289

(57) **Abstract**

The present invention relates to a high-brightness security film in which light transmittance is improved so as to improve brightness and clarity, wherein, according to one aspect of the present invention, provided is a security film comprising: a base layer formed of a light-transmitting material; and a pattern layer comprising: light transmitting portions which are formed of a light-transmitting material through which light incident from the base layer is transmitted, and which are spaced apart at predetermined intervals; and shielding portions which are formed between the spaced-apart light transmitting portions and comprise a resin and shielding particles dispersed in the resin so as to block light incident through the base layer, wherein the pattern layer limits a viewing angle by transmitting some of the light incident from the base layer, wherein at least a portion of a surface of a light-incident surface side of the shielding portions is formed to be round so that light reflected from the surface of the light-incident surface side of the shielding portions is reflected toward the light transmitting portions.

## Description

### [Technical Field]

The present invention relates to a high-brightness security film, and more specifically, to a security film in which brightness and clarity are improved by improving light transmittance.

### [Background Art]

In general, display screens of smartphones and laptops have wide viewing angles and high clarity and are widely used.

However, when used in public places such as outdoors, the content displayed on the display screen is exposed to others nearby regardless of the user's intention, causing problems such as personal privacy being violated or important information being leaked.

This has been a problem not only in personal mobile electronic devices such as smartphones and laptops, but also in ATM machines used in banks, or the like where the user's important financial information displayed on the screen is sometimes exposed to nearby others.

In order to solve the problems mentioned above, a security film used by being attached to the display screen was proposed.

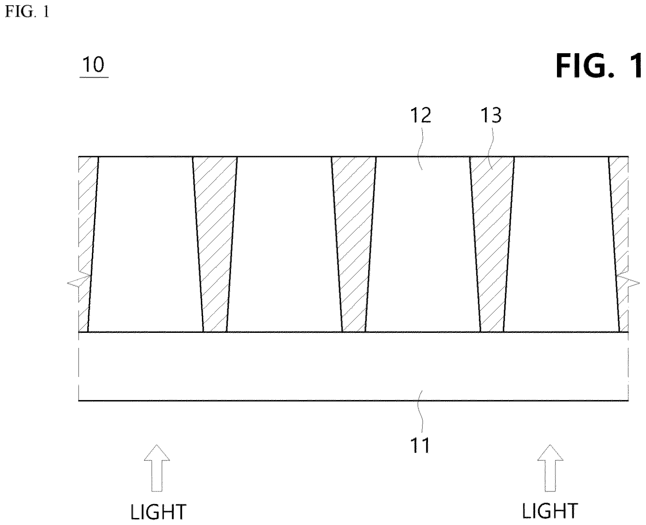

FIG. 1 is a cross-sectional view of a conventional security film.

As shown in FIG. 1, a conventional security film 10 has a structure in which a transmitting area 12 formed of a transparent material on a base film 11 and through which light is transmitted, and a shielding area 13 formed of a black material and through which light is blocked are repeatedly arranged.

The shielding area 13 has a trapezoidal cross-sectional shape, a flat bottom surface, and angled corners, and a viewing angle displayed on the screen is determined according to the relationship between the width of the transmitting area 12 and the depth of the shielding area 13 and thus the user can recognize the screen content according to the viewing angle.

Due to such structure, the screen content is visible within a viewing angle set from 0 degrees in a vertical direction of a front surface of the security film 10, and the screen becomes dark beyond the viewing angle, achieving the effect of shielding the screen content.

Meanwhile, the conventional security film 10 has a problem in that the brightness of the screen becomes dark because some of light incident on the security film 10 is blocked by the shielding area 13.

In particular, the conventional security film 10 has a problem in that a light-incident surface of the shielding area 13 and a light-emitting surface of the transmitting area 12 are flat, and thus the light hitting these flat surfaces is not utilized as meaningful light and is lost.

That is, among light flowing into the security film 10 from a display screen, light incident on the light-incident side end of the shielding area 13 may not be reflected to the transmitting area 12 and may be lost by absorption or reflection due to the characteristic that a surface of an incident surface side of the shielding area 13 has a flat structure, and light may not be emitted from the light-emitting surface due to total reflection, or the like due to a surface of the light-emitting surface side of the transmitting area 12 also being formed flat, thereby causing a problem of decreased light transmittance.

As a result of such light loss and decreased light transmittance of the security film 10, the brightness and clarity of the display screen viewed by the user are reduced.

### [Disclosure]

### [Technical Problem]

The present invention is intended to solve the above problems and directed to providing a high-brightness security film with high brightness due to improved light transmittance.

The objects of the present invention are not limited to the above-described objects, and other objects that are not mentioned will be able to be clearly understood by those skilled in the art from the description below.

### [Technical Solution]

According to one aspect of the present invention, there is provided a security film including a base layer formed of a light-transmitting material, and a pattern layer including light transmitting portions which are formed of a light-transmitting material through which light incident from the base layer is transmitted and are spaced apart at predetermined intervals, and shielding portions which are formed between the spaced-apart light transmitting portions and include a resin and shielding particles dispersed in the resin so as to block the light incident through the base layer, wherein the pattern layer limits a viewing angle by transmitting some of the light incident from the base layer, wherein at least a portion of a surface of a light-incident surface side of the shielding portion is rounded so that light reflected from the surface of the light-incident surface side of the shielding portion is reflected toward the light transmitting portion.

The shielding portion may include a first side surface portion that in in contact with the light transmitting portion and extends in a thickness direction of the pattern layer, an inner end portion forming an end of the light-incident surface side of the shielding portion, and a first curved portion formed at a portion where the inner end portion and the first side surface portion are connected and configured to be curved in a round shape, wherein light reflected from the first curved portion may be guided toward the light transmitting portion.

The first curved portion may be formed with a radius of curvature greater than 0 µm and less than or equal to 100 µm.

The inner end portion may be formed as a flat surface.

The inner end portion may be formed to be curved in a round shape.

A radius of curvature of the first curved portion may be formed to be different from a radius of curvature of the inner end portion.

At least a portion of a light-emitting surface of the light transmitting portion may be rounded so that light reflected from an inner side surface of the light-emitting surface of the light transmitting portion may be transmitted to the outside of the light-emitting surface of the light transmitting portion.

The light-emitting surface of the light transmitting portion may be formed to protrude further outward than the shielding portion.

A height by which the light-emitting surface of the light transmitting portion protrudes beyond the shielding portion may be greater than or equal to 0 *µ*m or less than or equal to 5 *µ*m.

The light transmitting portion may include a second side surface portion that is in contact with the shielding portion and extends in the thickness direction of the pattern layer, an outer end portion forming an end of the light-emitting surface of the light transmitting portion, and a second curved portion formed at a portion where the second side surface portion and the outer end portion are connected and configured to be curved in a round shape.

The second curved portion may be formed with a radius of curvature greater than 0 µm and less than or equal to 100 µm.

The outer end portion may be formed as a flat surface.

The outer end portion may be formed to be curved in a round shape.

The radius of curvature of the second curved portion may be formed to be different from the radius of curvature of the outer end portion.

A radius of curvature of the second curved portion may be formed to be smaller than a radius of curvature of the outer end portion.

The resin of the shielding portion may be formed with a refractive index smaller than that of the light transmitting portion.

A refractive index of the shielding portion including a mixture of the resin and the shielding particles may be formed to be greater than that of the light transmitting portion.

Meanwhile, according to another aspect of the present invention, a security film includes a base layer formed of a light-transmitting material, and a pattern layer including light transmitting portions which are formed of a light-transmitting material through which light incident from the base layer is transmitted and are spaced apart at predetermined intervals, and shielding portions which are formed between the spaced-apart light transmitting portions and include a resin and shielding particles dispersed in the resin so as to block the light incident through the base layer, wherein the pattern layer may limit a viewing angle by transmitting some of the light incident from the base layer, and in the pattern layer, at least a portion of a surface of a light-incident surface side of the shielding portion in a direction in which light is incident or a surface of a light-emitting surface side of the light transmitting portion in a direction in which light is emitted is rounded to improve light transmittance.

The shielding portion may include a first side surface portion that is in contact with the light transmitting portion and extends in the thickness direction of the pattern layer, an inner end portion forming an end of the light-incident surface side of the shielding portion, and a first curved portion formed at a portion where the inner end portion and the first side surface portion are connected and configured to be curved in a round shape, and the light-emitting surface of the light transmitting portion may be formed to protrude further outward than the shielding portion.

The light transmitting portion may be formed with a greater refractive index than a refractive index of a material in contact with an outer side of the light-emitting surface of the light transmitting portion.

The security film may further include a base portion disposed between the base layer and the pattern layer and formed of a light-transmitting material.

The base portion may be formed of the same material and with the same refractive index as the light transmitting portion.

### [Advantageous Effects]

According to a high-brightness security film of the present invention, since some of the light incident on the surface of the light-incident surface of a shielding portion among the light flowing into the security film is reflected toward the light transmitting portion light is not lost and thus light transmittance can be improved.

In addition, light transmittance can be improved by minimizing light that does not pass through the light-emitting surface due to total reflection, or the like on the light-emitting surface of the light transmitting portion.

The effects of the present invention are not limited to the above-described effects, and other effects that are not mentioned will be able to be clearly understood by those skilled in the art from the description of the claims.

### [Description of Drawings]

The summary described above as well as the detailed description of the preferred embodiments of the present application described below may be better understood when read in conjunction with the accompanying drawings. Preferred embodiments are shown in the drawings for the purpose of illustrating the present invention. However, it should be understood that the present application is not limited to the exact arrangement and means shown.
FIG. 1 is a cross-sectional view showing a conventional security film.
FIG. 2 is a cross-sectional view showing a cross-section of a security film according to one embodiment of the present invention.
FIG. 3 is a cross-sectional view showing a cross-section of the security film according to one embodiment of the present invention with a base portion omitted.
FIG. 4 is a view showing one form of a light-incident surface side of a shielding portion of FIG 2.
FIG. 5 is a view showing another form of the light-incident surface side of the shielding portion of FIG. 2,
FIG. 6 is a view showing the transmission, refraction, and reflection patterns according to an incident angle of light at the interface at which media of different refractive indices come into contact.
FIG. 7 is a view showing how light is reflected and refracted on the surface of a light-incident surface side of a shielding area in the conventional security film.
FIG. 8 is a view showing how light is reflected and refracted on the surface of a light-incident surface side of a shielding portion in the security film according to one embodiment of the present invention.
FIG. 9 is a cross-sectional view showing a cross-section of a security film according to another embodiment of the present invention.
FIG. 10 is a view showing one form of a light-emitting surface of a light transmitting portion of FIG. 9.
FIG. 11 is a view showing another form of the light-emitting surface of the light transmitting portion of FIG. 9.
FIG. 12 is a view showing how light is reflected and refracted on a light-emitting surface of a transmitting area in the conventional security film.
FIG. 13 is a view showing how light is reflected and refracted on a light-emitting surface of a light transmitting portion in the security film according to another embodiment of the present invention.

### [Modes of the Invention]

Hereinafter, preferred embodiments of the present invention by which the objects of the present invention may be achieved will be described in detail with reference to the accompanying drawings. In describing these embodiments, the same names and the same reference numerals are used for the same components and additional description accordingly will be omitted.

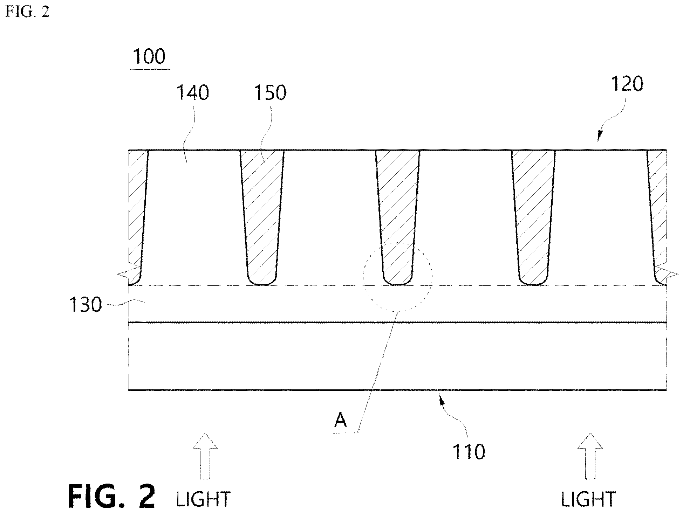

Hereinafter, a security film according to one embodiment of the present invention will be described with reference to FIGS. 2 to 5.

A security film 100 according to the present embodiment may include a base layer 110 and a pattern layer 120.

The base layer 110 may be formed of a film material such as a light-transmitting polymer. The base layer 110 as described above may be provided on a light-incident side where light is incident and may be in contact with or attached to a surface of a display, etc.

The pattern layer 120 may be formed on the base layer 110, and may include a base portion 130 through which light passing through the base layer 110 is incident, and a light transmitting portion 140 through which the light incident from the base portion 130 is transmitted, and a shielding portion 150 that is arranged alternately with the light transmitting portion 140 and blocks light, and may be provided to limit a viewing angle by blocking and transmitting some of the light incident from the base layer 110.

The base portion 130 may be disposed to be in contact with the base layer 110 and may be formed of a light-transmitting material.

In addition, the light transmitting portions 140 may be formed of the same light-transmitting material as the base portion 130 and may be arranged to be spaced apart at predetermined intervals. The shielding portions 150 may be formed between the light transmitting portions 140 spaced apart from each other and may be repeatedly arranged alternately with the light transmitting portions 140. Therefore, the shielding portion 150 may be arranged in a form in which sides and a light-incident surface side are surrounded by the light transmitting portions 140 and the base portion 130. In addition, the shielding portion 150, based on a traveling direction of light within the security film 100, may be formed with a trapezoidal cross-section where a width of the light-emitting side is wider than a width of the light-incident side, or a rectangular cross-section with a width of the light-incident side is the same as a width of the light-emitting side. In addition, the light transmitting portion 140 and the shielding portion 150 may extend long in a predetermined direction along a surface of a plane when viewed from the plane.

The base portion 130 and the light transmitting portion 140 may be formed of the same photocurable transparent resin material, and the shielding portion 150 may include a black pigment, a dye, or shielding particles such as carbon or metal. For example, the shielding portion 150 may be formed by mixing a resin and carbon particles dispersed in the resin.

Since the base portion 130 and the light transmitting portion 140 are made of the same material, their refractive indices are the same, and the refractive index of the shielding portion 150 may be different from those of the base portion 130 and the light transmitting portion 140. In this case, the refractive index of each of the light transmitting portion 140 and the base portion 130 may be greater than the refractive index of the resin forming the shielding portion 150.

Since the light transmitting portion 140 and the base portion 130 may have a greater refractive index than that of the resin of the shielding portion 150, the light transmittance of the security film may be increased, and distortion of a transmitted and displayed image may be prevented.

Meanwhile, the light-incident surface of the base layer 110 or the light-emitting surface of the pattern layer 120 may be further provided with a functional imparting layer with functionality such as an adhesive layer, an anti-fingerprint layer, and an anti-scratch layer.

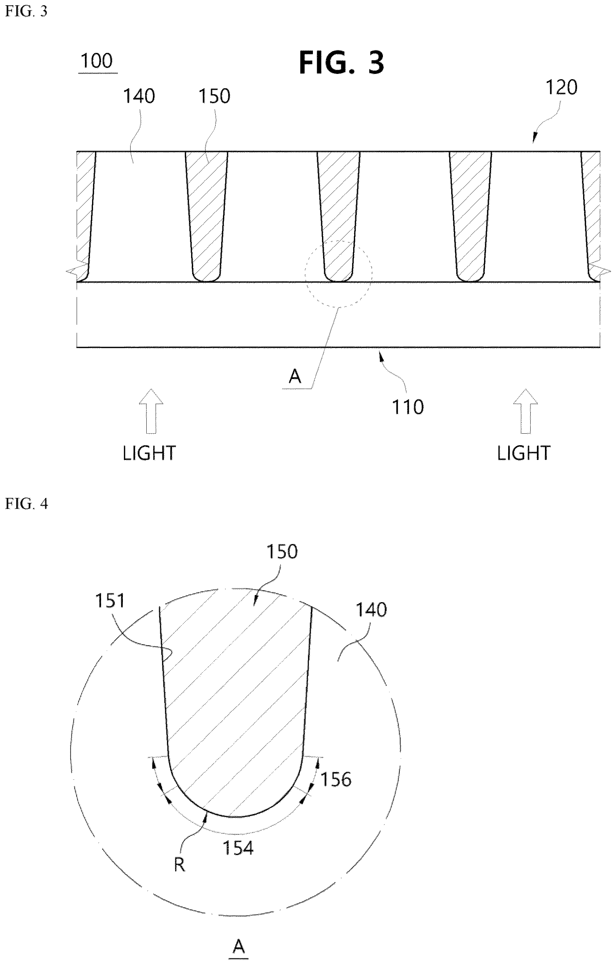

In addition, the base portion 130 may not be formed as needed. That is, as shown in FIG. 3, when the base portion 130 is not formed, the shielding portion 150 may be formed in direct contact with the base layer 110.

Meanwhile, as shown in FIG. 2, at least a portion of a surface of the light-incident surface side of the shielding portion 150 may be rounded so that light reflected from the surface of the light-incident surface side where light is incident may be reflected toward the light transmitting portion 140.

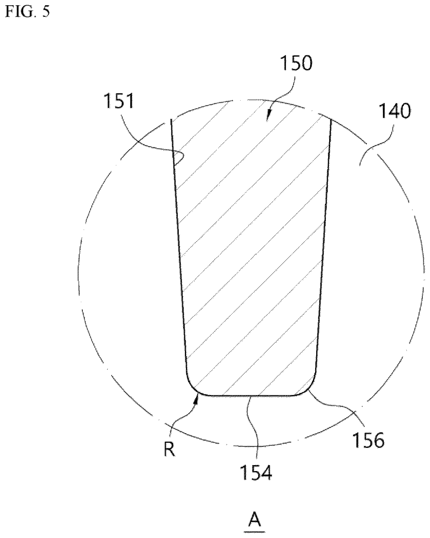

As shown in FIGS. 4 and 5, the shielding portion 150 may include a first side surface portion 151, an inner end portion 154, and a first curved portion 156.

The first side surface portion 151 may form a side surface of the shielding portion 150, may be in contact with the light transmitting portion 140, and may extend in a thickness direction of the pattern layer 120.

The inner end portion 154 may form an end portion of the light-incident surface side of the shielding portion 150. In addition, the first curved portion 156 may be formed at a portion in which the inner end portion 154 and the side surface portion are connected, and may be configured to be curved in a round shape.

Therefore, the inner end portion 154 and the first curved portion 156 may be located on the light-incident surface side of the shielding portion 150.

As shown in FIGS. 4 and 5, the first curved portion 156 may be formed to be curved inwardly in a round shape in a form that surrounds the shielding portion, and through this, at least some of the incident light on the first curved portion 156 may be guided toward the light transmitting portion 140.

As shown in FIG. 4, the inner end portion 154 may be formed round with the same radius of curvature as the first curved portion 156 or may be formed round with a radius of curvature different from that of the first curved portion 156 to induce light reflection. In this case, the inner end portion 154 may be formed to be curved inwardly in a round shape in a form that surrounds the shielding portion 150. Alternatively, as shown in FIG. 5, the inner end portion 154 may be formed as a flat surface.

In addition, the radius of curvature of the first curved portion 156 may be formed differently from the radius of curvature of the inner end portion 154 depending on required characteristics. That is, the radius of curvature of the first curved portion 156 may be formed to be greater than the radius of curvature of the inner end portion 154, or may be formed to be smaller than the radius of curvature of the inner end portion 154.

In this case, the radius of curvature of the first curved portion 156 may be greater than 0 µm and less than or equal to 100 µm.

In general, since a width of the light-incident surface side of the shielding portion 150 may be about 5*µ*m to 15*µ*m, when the radius of curvature of the first curved portion 156 exceeds 100*µ*m, the increase in transmittance may be minimal because the radius of curvature of the first curved portion 156 is too large compared to the width of the shielding portion 150 and becomes similar to a flat surface. Therefore, in order to effectively increase light transmittance, the radius of curvature of the first curved portion 156 may be greater than 0 µm and less than or equal to 20 µm.

Also, when viewed based on the cross-section of the shielding portion 150, a length of a surface curve of the first curved portion 156 may be greater or smaller than a surface length of the inner end portion 154 depending on the required characteristics.

Alternatively, when viewed based on the cross-section of the shielding portion 150, the sum of the lengths of the surface curves of the first curved portion 156 connected to both sides of the inner end portion 154 may be greater or smaller than the surface length of the inner end portion 154 according to the required characteristics. For example, when the sum of the lengths of the curves of the first curved portion 156 connected to both sides of the inner end portion 154 is greater than the length of the inner end portion 154, it is possible to induce more light reflection of the light incident on the first curved portion 156 toward the light transmitting portion.

The reason why the amount of light transmitted increases due to the curvature of the first curved portion 156 will be described.

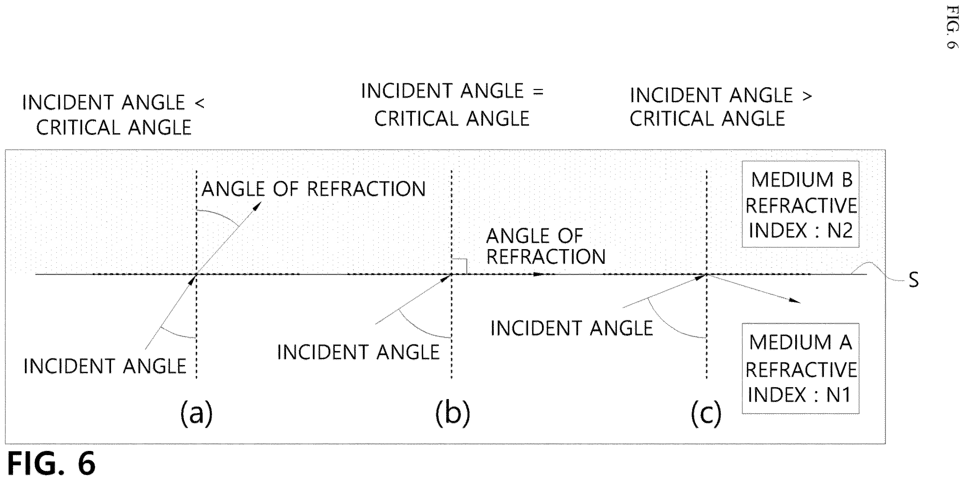

FIG. 6 is a view showing the transmission, refraction, and reflection patterns according to an incident angle of light at an interface S at which medium A and medium B having different refractive indices come into contact.

The refractive index of medium A is denoted as nl, and the refractive index of medium B is denoted as n2. In this case, the refractive index n1 of medium A may be greater than the refractive index n2 of medium B.

When light travels from medium A to medium B, refraction or reflection may occur at the interface S between medium A and medium B.

That is, as shown in FIG. 6A, when the magnitude of the incident angle of light is smaller than a critical angle, light incident from medium A may be refracted at the interface S, pass through the same, and proceed to medium B.

Alternatively, as shown in FIG. 6B, when the magnitude of the incident angle of light is equal to the critical angle, the light incident from medium A does not pass through the interface S and may proceed along the interface S.

Alternatively, as shown in FIG. 6C, when the magnitude of the incident angle of light is greater than the critical angle, the light incident from medium A does not pass through the interface S and may be totally reflected.

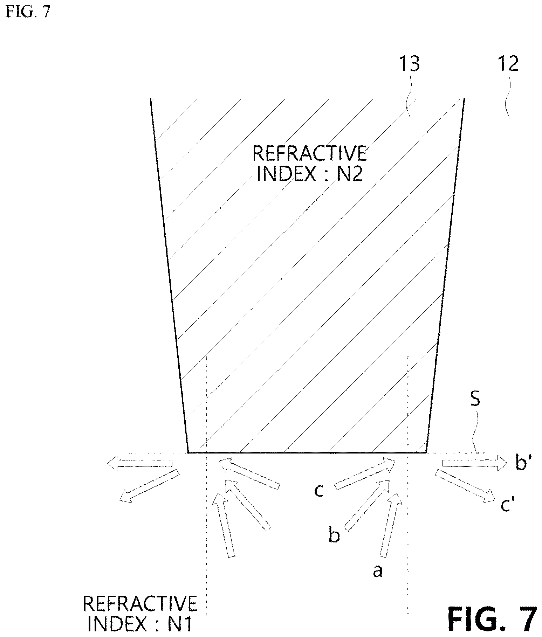

FIG. 7 is a view showing how light is reflected and refracted on the surface of a light-incident surface side of the shielding area 13 in the conventional security film 100.

Referring to FIG. 7, when the incident angle is smaller than a critical angle as in a, among the light incident on the light-incident side surface of the shielding area 13 of the security film 100, the light may pass through the interface S of the shielding area 13 and proceed to the shielding area 13 and may be absorbed and lost within the shielding area 13.

In addition, when the incident angle is equal to the critical angle as in b, the light may proceed along the interface S of the shielding area 13 and may be reflected in the b' direction.

Additionally, when the incident angle is greater than the critical angle as in c, the light may be totally reflected and proceed toward the base portion 130 in the c' direction.

As such, it can be seen that all the light directed to the surface of the light-incident surface side of the shielding area 13 of the security film 100 may be lost by absorption or reflection.

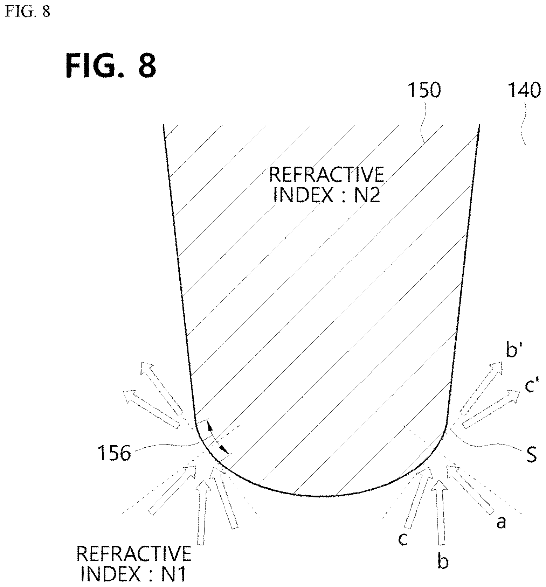

FIG. 8 is a view showing how light is reflected and refracted on the surface of a light-incident surface side of the shielding portion 150 of the security film 100 according to one embodiment of the present invention.

To facilitate understanding, a specific point of the shielding portion 150 in a curved shape will be selected and described.

A tangential direction of a curved surface at the specific point becomes a direction of the media interface, and a perpendicular direction thereof becomes a direction with an incident angle of 0 degrees, which is indicated by a cross-dotted line in the drawing accordingly.

Referring to FIG. 8, when the incident angle is smaller than a critical angle as in a, among the light incident on the first curved portion 156 of the light-incident surface of the shielding portion 150 of the security film 100, the light may pass through the interface S of the shielding area 13 and proceed to the shielding area 13, and may be absorbed and lost within the shielding area 13.

Alternatively, when the incident angle is equal to the critical angle as in b, the light may proceed along the interface S and be reflected in the b' direction. At this time, since the direction of the media interface is toward the light-emitting surface side of the light transmitting portion 140, the reflected light may proceed toward the light transmitting portion 140.

Alternatively, when the incident angle is greater than the critical angle as in c, since the light may be totally reflected at the interface S and proceed toward the light-emitting surface side of the light transmitting portion 140 in the c' direction, the reflected light may proceed toward the light transmitting portion 140.

As such, among the light incident on the light-incident surface side in a curved shape of the shielding portion 150 of the security film 100, when the incident angle is smaller than the critical angle, the light may be lost, but when the incident angle is equal to or greater than the critical angle, the light may be reflected toward the light transmitting portion 140, thereby increasing the amount of light incident on the light transmitting portion 140.

In more detail, the shielding portion 150 may be formed of a resin mixed with carbon acting as light shielding particles, wherein a mixing ratio of the resin and the carbon may be 90 to 99% by weight of resin and 1 to 10% by weight of carbon. In this case, the carbon mixed in the resin may be uniformly distributed in the resin.

Although the mixing ratio of the carbon mixed in the resin of the shielding portion 150 is only about 1 to 10%, since the shielding portion 150 is formed long in the vertical direction, as the light incident on the shielding portion 150 travels within the shielding portion 150, the light may continuously come into contact with the dispersed carbon particles, and absorbed or scattered and thus blocked.

However, the refractive index in a mixed state of the resin and the carbon may be greater than the refractive index of the light transmitting portion 140. That is, the refractive index of the resin, which is a main material of the shielding portion 150, is smaller than the refractive index of the light transmitting portion 140, but the refractive index of the shielding portion 150 in a mixed state of the resin and the carbon may be greater than the refractive index of the light transmitting portion 140.

However, since the light incident on an incident surface of the shielding portion will come into contact with the resin of the shielding portion 150, which accounts for more than 90% of the incident surface, the effects of light transmission, refraction, and reflection on such an incident surface may be seen as a case where light is incident from the light transmitting portion 140 or base portion 130 which has a greater refractive index than that of the resin of the shielding portion 150, to the resin of the shielding portion 150, which has a smaller refractive index.

Meanwhile, when the ratio of the carbon is less than 1%, since the light shielding effect may be reduced due to insufficient carbon particles contained in the shielding portion 150, problems such as light being visible at a shielding angle outside a set viewing angle may occur.

In addition, when the ratio of the carbon is equal to or more than 10%, since the dispersibility of the carbon in the resin is not good due to the nature of carbon, uniform dispersion of the carbon within the shielding portion 150 is disadvantageous, and additionally, as the amount of carbon increases, since the amount of resin decreases, the amount of carbon may also increase at the interface of the shielding portion 150, which may drastically reduce the light reflection induction effect described above, thereby lowering the amount of light transmission of the security film.

Hereinafter, the results of a comparative experiment on the transmittance of the security film according to the present embodiment and the conventional security film will be described.

As shown in FIG. 5, the security film 100 according to the present embodiment was tested when the first curved portion had a radius of curvature of 2*µ*m to 4*µ*m and the inner end portion was formed as a flat surface.

The conventional security film 10 has the same structure as the security film according to the embodiment of the present invention, except that, as shown in FIG. 1, the end portion of the light-incident surface side of the shielding area 13 was formed as a flat surface.

In this case, the amount of light radiated to the security film 100 according to the present embodiment and the conventional security film 10 was the same.

**[Table 1]**

| Classification | Viewing angle | Ratio of the area of the light transmitting portion to the total area of the upper surface of the film | Actual measurement of light transmittance | Light transmitta nce difference |
|---|---|---|---|---|
| Conventional security film | ±35.5° | 72.42% | 64.3% | - |
| The embodiment of the present invention | ±36° | 72.14% | 65.9% | 1.6% |

Table 1. Comparison of the transmittance between the security film according to the embodiment of the present invention and the conventional security film

As shown in Table 1, regarding the transmittance of the conventional security film 10 and the security film 100 according to the embodiment of the present invention, it can be seen that, although an area ratio of the light transmitting portion of the security film 100 of the embodiment of the present invention is small, the light transmittance is improved by 1.6%.

Hereinafter, a security film 200 according to another embodiment of the present invention will be described.

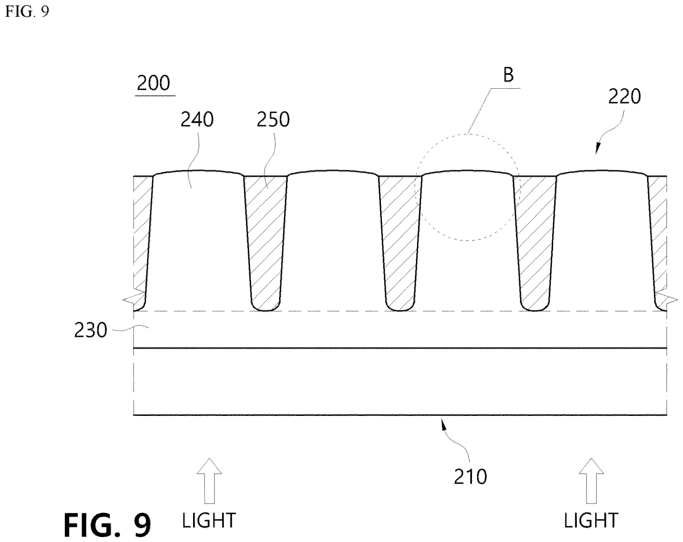

As shown in FIG. 9, the security film 200 according to the present embodiment may include a base layer 210 and a pattern layer 220.

Since the base layer 210 is substantially the same as the base layer 110 in the above-described embodiment, detailed description thereof will be omitted.

The pattern layer 220 may include a base portion 230, a light transmitting portion 240, and a shielding portion 250.

Since the base portion 230 is substantially the same as the base portion 130 in the above-described embodiment, detailed description thereof will be omitted.

The shielding portion 250 may also be the same as the shielding portion 150 in the above-described embodiment. However, at least a portion of the surface of the light-incident surface side of the lower side of the shielding portion 150 in the above-described embodiment may be formed round, but a surface of a light-incident surface side of a lower end of the shielding portion 250 in the present embodiment may be formed flat as needed. Of course, the present invention is not limited thereto, and at least a portion of the surface of the light-incident surface side may be formed round, similar to the shielding portion 150 in the above-described embodiment.

According to the present embodiment, as shown in portion B of FIG. 9, at least a portion of a light-emitting surface 248 of the light transmitting portion 240 may be formed round so that light reflected from an inner side surface of the light-emitting surface 248 of the light transmitting portion 240 may be transmitted to the outside of the light-emitting surface 248 of the light transmitting portion 240.

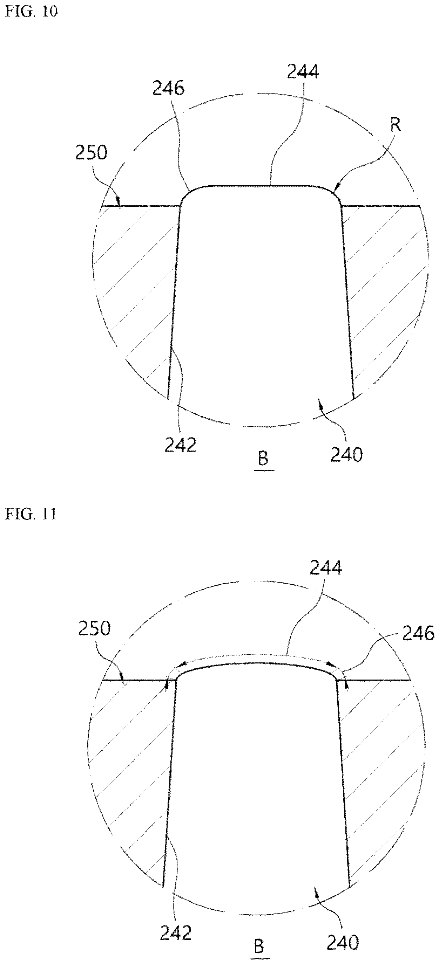

As shown in FIGS. 10 and 11, the light transmitting portion 240 may include a second side surface portion 242, an outer end portion 244, and a second curved portion 246.

The second side surface portion 242 may form a side surface of the light transmitting portion 240, may be in contact with the shielding portion 250, and may extend in the thickness direction of the pattern layer 220.

The outer end portion 244 may form an end portion of the light-emitting surface 248 of the light transmitting portion 240. In addition, the second curved portion 246 may be formed at a portion where the second side surface portion 242 and the outer end portion 244 are connected, and may be configured to be curved in a round shape.

The outer side of the light-emitting surface 248 of the light transmitting portion 240 may be in contact with external air or another functional imparting layer to form an optical interface S. In this case, the refractive index of the light transmitting portion 240 may be formed to be greater than the refractive index of a material in contact with the outer side of the light-emitting surface 248, that is, the refractive index of air or the functional imparting layer.

In order to form a curved surface of the light-emitting surface 248 of the light transmitting portion 240 and increase the optical light transmitting effect, the light-emitting surface 248 of the light transmitting portion 240 may protrude further than the shielding portion 250, and this protruding height may be 0*µ*m to 5*µ*m.

Therefore, a significant amount of light incident on the second curved portion 246 may pass through the light-emitting surface 248.

As shown in FIG. 10, the outer end portion 244 may be formed flat, or as shown in FIG. 11, the outer end portion 244 may be formed round with a different or the same radius of curvature as that of the second curved portion 246.

When the second curved portion 246 is formed with a radius of curvature different from the radius of curvature of the outer end portion 244, the radius of curvature of the second curved portion 246 may be formed to be smaller than the radius of curvature of the outer end portion 244, and in this case, the light transmission effect may be increased for much of the light reflected from the second side surface portion 242 and directed toward the second curved portion 246.

In this case, the radius of curvature of the second curved portion 246 may be greater than 0 µm and less than or equal to 100 µm.

In general, since a width of the light-emitting surface 248 side of the light transmitting portion 240 may be about 30*µ*m to 40*µ*m, when the radius of curvature of the second curved portion 246 exceeds 100,um, the increase in transmittance may be minimal because the radius of curvature of the second curved portion 246 is too large compared to the width of the light transmitting portion 240 and becomes similar to a flat surface. Therefore, in order to effectively increase light transmittance, the radius of curvature of the second curved portion 246 may be greater than 0 µm and less than or equal to 20 µm.

The reason why the amount of light passing through the light-emitting surface increases due to the curvature of the second curved portion 246 will be explained.

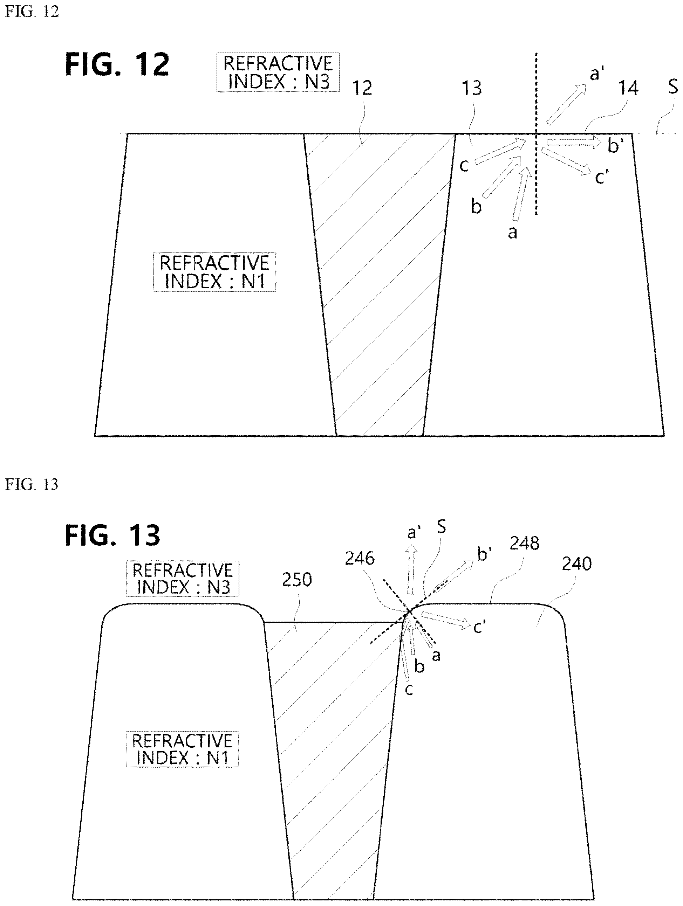

FIG. 12 is a view how light is reflected and refracted on the light-emitting surface 14 of the light transmitting area in the conventional security film 10.

Referring to FIG. 12, when the incident angle is smaller than a critical angle as in a, among the light incident on the light-emitting surface 14 of the light transmitting area of the security film 10, the light may be refracted and may pass through the light-emitting surface 14 and proceed in the a' direction.

Alternatively, when the incident angle is equal to the critical angle as in b, the light may proceed along the interface S of the light-emitting surface 14 and may be reflected in the direction b'.

Alternatively, when the incident angle is greater than the critical angle as in c, the light may be totally reflected in the c' direction and reflected to the inside of the transmitting area.

Therefore, it can be seen that when the incident angle is equal to or greater than the critical angle as in b or c, the light may not pass through the light-emitting surface 14, and thus may not be used as meaningful light.

FIG. 13 is a view how light is reflected and refracted on the light-emitting surface of the light transmitting portion 240 of the security film 200 according to the present embodiment.

A tangential direction of a curved surface of the second curved portion 246 becomes a direction of the media interface, and a perpendicular direction thereof becomes a direction with an incident angle of 0 degrees, which is indicated by a cross-dotted line in the drawing accordingly.

Referring to FIG. 13, when the incident angle is smaller than a critical angle as in a, among the light incident on the second curved portion 246 of the light-emitting surface 248 of the shielding portion 250 of the security film 200, the light may pass through the interface S of the light transmitting area, may be refracted, and may proceed in the a' direction through the light-emitting surface 248.

Alternatively, when the incident angle is equal to the critical angle as in b, the light proceeds along the interface S and is reflected in the b' direction. At this time, since the direction of the media interface is toward the outside of the light-emitting surface 248, the reflected light may pass through the light-emitting surface 248 and proceed in the b' direction.

Alternatively, when the incident angle is greater than the critical angle as in c, the light may be totally reflected at the interface S and may be totally reflected toward the inside of the light transmitting portion 240 in the c' direction.

As such, among the light incident on the second curved portion 246 of the light-emitting surface 248 of the light transmitting portion 240 of the security film 200, when the incident angle is greater than the critical angle, the light may not pass through the light-emitting surface 248, but when the incident angle is smaller than or equal to the critical angle, the light may pass through the light-emitting surface 248, thereby increasing the amount of light passing through the light-emitting surface 248.

That is, in the conventional structure, when the incident angle is equal to the critical angle, the light may not pass through the light-emitting surface 248, but according to the present embodiment, even when the incident angle is equal to the critical angle, the light may pass through the light-emitting surface 248, thereby increasing light transmittance.

As described above, preferred embodiments according to the present invention have been described, and it is self-evident to those skilled in the art that the present invention may be embodied in other specific forms in addition to the embodiments described above without departing from the spirit or scope thereof. Therefore, the above-described embodiments should be considered exemplary and not limiting and the present invention is not limited to the above description but may be modified within the scope of the appended claims and equivalents thereof.

## Claims

1. A security film comprising:
a base layer formed of a light-transmitting material; and
a pattern layer including light transmitting portions which are formed of a light-transmitting material through which light incident from the base layer is transmitted and are spaced apart at predetermined intervals, and shielding portions which are formed between the spaced-apart light transmitting portions and include a resin and shielding particles dispersed in the resin so as to block the light incident through the base layer, wherein the pattern layer limits a viewing angle by transmitting some of the light incident from the base layer,
wherein at least a portion of a surface of a light-incident surface side of the shielding portion is rounded so that light reflected from the surface of the light-incident surface side of the shielding portion is reflected toward the light transmitting portion.

2. The security film of claim 1, wherein the shielding portion includes:
a first side surface portion that is in contact with the light transmitting portion and extends in a thickness direction of the pattern layer;
an inner end portion forming an end of the light-incident surface side of the shielding portion; and
a first curved portion formed at a portion where the inner end portion and the first side surface portion are connected and configured to be curved in a round shape,
wherein light reflected from the first curved portion is guided toward the light transmitting portion.

3. The security film of claim 2, wherein the first curved portion is formed with a radius of curvature greater than 0 µm and less than or equal to 100 µm.

4. The security film of claim 2, wherein the inner end portion is formed as a flat surface.

5. The security film of claim 2, wherein the inner end portion is formed to be curved in a round shape.

6. The security film of claim 5, wherein a radius of curvature of the first curved portion is formed to be different from a radius of curvature of the inner end portion.

7. The security film of claim 1, wherein at least a portion of a light-emitting surface of the light transmitting portion is rounded so that light reflected from an inner side surface of the light-emitting surface of the light transmitting portion is transmitted to the outside of the light-emitting surface of the light transmitting portion.

8. The security film of claim 7, wherein the light-emitting surface of the light transmitting portion is formed to protrude further outward than the shielding portion.

9. The security film of claim 8, wherein a height by which the light-emitting surface of the light transmitting portion protrudes beyond the shielding portion is greater than or equal to 0 *µ*m or less than or equal to 5 *µ*m.

10. The security film of claim 7, wherein the light transmitting portion includes:
a second side surface portion that is in contact with the shielding portion and extends in a thickness direction of the pattern layer;
an outer end portion forming an end of the light-emitting surface of the light transmitting portion; and
a second curved portion formed at a portion where the second side surface portion and the outer end portion are connected and configured to be curved in a round shape.

11. The security film of claim 10, wherein the second curved portion is formed with a radius of curvature greater than 0 µm and less than or equal to 100 µm.

12. The security film of claim 10, wherein the outer end portion is formed as a flat surface.

13. The security film of claim 10, wherein the outer end portion is formed to be curved in a round shape.

14. The security film of claim 13, wherein a radius of curvature of the second curved portion is formed to be different from a radius of curvature of the outer end portion.

15. The security film of claim 14, wherein the radius of curvature of the second curved portion is formed to be smaller than the radius of curvature of the outer end portion.

16. The security film of claim 1, wherein the resin of the shielding portion is formed with a refractive index smaller than that of the light transmitting portion.

17. The security film of claim 1, wherein a refractive index of the shielding portion including a mixture of the resin and the shielding particles is formed to be greater than that of the light transmitting portion.

18. A security film comprising:
a base layer formed of a light-transmitting material; and
a pattern layer including light transmitting portions which are formed of a light-transmitting material through which light incident from the base layer is transmitted and are spaced apart at predetermined intervals, and shielding portions which are formed between the spaced-apart light transmitting portions and include a resin and shielding particles dispersed in the resin so as to block the light incident through the base layer, wherein the pattern layer limits a viewing angle by transmitting some of the light incident from the base layer,
wherein in the pattern layer, at least a portion of a surface of a light-incident surface side of the shielding portion in a direction in which light is incident or a surface of a light-emitting surface side of the light transmitting portion in a direction in which light is emitted is rounded to improve light transmittance.

19. The security film of claim 18, wherein the shielding portion includes:
a first side surface portion that is in contact with the light transmitting portion and extends in a thickness direction of the pattern layer;
an inner end portion forming an end of the light-incident surface side of the shielding portion; and
a first curved portion formed at a portion where the inner end portion and the first side surface portion are connected and configured to be curved in a round shape,
wherein the light-emitting surface of the light transmitting portion is formed to protrude further outward than the shielding portion.

20. The security film of claim 18, wherein the light transmitting portion is formed with a greater refractive index than a refractive index of a material in contact with an outer side of the light-emitting surface of the light transmitting portion.

21. The security film of claim 1, further comprising a base portion disposed between the base layer and the pattern layer and formed of a light-transmitting material.

22. The security film of claim 21, wherein the base portion is formed of the same material and with the same refractive index as the light transmitting portion.

23. The security film of claim 18, further comprising a base portion disposed between the base layer and the pattern layer and formed of a light-transmitting material.

24. The security film of claim 23, wherein the base portion is formed of the same material and with the same refractive index as the light transmitting portion.
